# EUROPEAN PATENT APPLICATION

(11) **EP 4 333 438 A1**
(43) Date of publication of application: **06.03.2024**
(21) Application number: 23193010.8
(22) Date of filing: 23.08.2023
(51) Int. Cl.: H04N 21/2743, G06F 3/0484, G06Q 50/00, H04L 51/52, H04N 21/472

(54) **SYSTEMS AND METHODS FOR SOCIAL MEDIA VIDEO STREAMING**

(30) Priority: 24.08.2022 US 202217895040
(71) Applicant: Meta Platforms, Inc., Menlo Park, CA 94025 (US)
(72) Inventor: NEISS, Michael George, Menlo Park, 94025 (US)
(74) Representative: Murgitroyd & Company

(57) **Abstract**

Systems and methods for audio feed streaming may include (1) receiving user input for a user's device selecting a short-form video creation element corresponding to a newsfeed post presented within a newsfeed interface configured for the user, (2) in response to receiving the user input, presenting a short-form video creation interface that enables the user to create a newsfeed-instigated short-form video that includes both content from the newsfeed post and new content added via the short-form video creation interface, and (3) creating the newsfeed-instigated short-form video based on one or more user inputs to the short-form video creation interface. Various other methods, systems, and computer-readable media are also disclosed.

## Description

### FIELD OF THE DISCLOSURE

The present disclosure relates to the field of short-form video streaming.

### SUMMARY

In accordance with a first aspect of the present disclosure, there is provided a computer-implemented method comprising: receiving user input for a user's device selecting a short-form video creation element corresponding to a newsfeed post presented within a newsfeed interface configured for the user; in response to receiving the user input, presenting a short-form video creation interface that enables the user to create a newsfeed-instigated short-form video comprising both content from the newsfeed post and new content added via the short-form video creation interface; and creating the newsfeed-instigated short-form video based on one or more user inputs to the short-form video creation interface.

In some embodiments, the short-form video creation element is displayed at least one of (1) within the newsfeed post, (2) proximate to the newsfeed post, or (3) within a menu accessible via an affordance of the newsfeed post.

In some embodiments, presenting the short-form video creation interface comprises automatically providing the content from the newsfeed post within the short-form video creation interface to be added to the newsfeed-instigated short-form video.

In some embodiments, the content from the newsfeed post comprises static content comprising at least one of an image or text.

In some embodiments, the new content comprises at least one of new video, new audio, a new image, or new text to be provided in the newsfeed-instigated short-form video at least one of before, during, or after a display of the static content.

In some embodiments, the static content comprises an image and the short-form video creation interface enables the user to edit the image.

In some embodiments, the static content comprises text and the short-form video creation interface enables the user to edit the text by at least one of editing a visual appearance of the text, redacting the text, or adding commentary to the text.

In some embodiments, the content from the newsfeed post comprises media content comprising at least one of video content or audio content.

In some embodiments, the short-form video creation interface enables the user to at least one of: delete one or more portions of the media content; apply at least one of a visual filter or an audio filter to the media content; or add new content to the newsfeed-instigated short-form video, the new content comprising at least one of new audio, new video, a new image, or new text to be provided in the newsfeed-instigated short-form video at least one of before, during, or after a display of the media content.

In some embodiments, the newsfeed post comprises a link.

In some embodiments, the short-form video creation interface enables the user to edit the newsfeed post by at least one of: enabling the user to add new content to the newsfeed-instigated short-form video, the new content comprising at least one of new audio, new video, a new image, or new text, to be provided in the newsfeed-instigated short-form video at least one of before, during, or after a display of at least one of the link or content accessed via the link; enabling the user to edit an image accessed via the link; enabling the user to edit text accessed via the link by enabling the user to at least one of edit a visual quality of the text, redact the text, or add commentary to the text; enabling the user to delete a portion of at least one of video or audio accessed via the link; or enabling the user to apply at least one of a visual filter or an audio filter to content accessed via the link.

In some embodiments, the computer-implemented method further comprises: streaming the newsfeed-instigated short-form video to an additional user's device via at least one of an additional newsfeed interface configured for the additional user or a short-form video digest interface configured for the additional user.

In some embodiments, streaming the newsfeed-instigated short-form video comprises presenting, in association with the newsfeed-instigated short-form video, a visual indicator linking the newsfeed-instigated short-form video to the newsfeed post.

In some embodiments, the visual indicator comprises a link to at least one of (1) the newsfeed post or (2) additional newsfeed-instigated short-form videos corresponding to the newsfeed post.

In some embodiments, the computer-implemented method further comprises: presenting the newsfeed post within an additional newsfeed interface, configured for an additional user, via a device of the additional user; and presenting, proximate to the newsfeed post within the additional newsfeed interface, a link to the newsfeed-instigated short-form video.

In some embodiments, the computer-implemented method further comprises: in response to receiving additional user input selecting the link, streaming the newsfeed-instigated short-form video via the additional user's device.

In some embodiments, the computer-implemented method further comprises: initiating automatic short-form video chaining via the additional user's device, in response to receiving the additional user input, by streaming a plurality of additional short-form videos after streaming the newsfeed-instigated short-form video, automatically proceeding from streaming one additional short-form video to a next additional short-form video.

In some embodiments, the newsfeed interface is provided as part of a newsfeed platform hosted by a social media service that also hosts a short-form video platform; the short-form video platform provides users with a short-form video-feed comprising a series of short-form videos configured to be streamed, one by one, as a continuous series; and the short-form video comprises a short-form video configured for short-form video-feed consumption.

In accordance with a second aspect of the present disclosure, there is provided a system comprising: at least one physical processor; physical memory comprising computer-executable instructions that, when executed by the physical processor, cause the physical processor to: receive user input to a user's device selecting a short-form video creation element corresponding to a newsfeed post presented within a newsfeed interface configured for the user; in response to receiving the user input, present a short-form video creation interface that enables the user to create a newsfeed-instigated short-form video comprising both content from the newsfeed post and new content added via the short-form video creation interface; and create the newsfeed-instigated short-form video based on one or more user inputs to the short-form video creation interface.

In accordance with a third aspect of the present disclosure, there is provided a non-transitory computer-readable medium comprising one or more computer-readable instructions that, when executed by at least one processor of a computing device, cause the computing device to: receive user input to a user's device selecting a short-form video creation element corresponding to a newsfeed post presented within a newsfeed interface configured for the user; in response to receiving the user input, present a short-form video creation interface that enables the user to create a newsfeed-instigated short-form video comprising both content from the newsfeed post and new content added via the short-form video creation interface; and create the newsfeed-instigated short-form video based on one or more user inputs to the short-form video creation interface.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 is a flow diagram of an exemplary method for social media video streaming.
FIG. 2 is a block diagram of an exemplary system for social media video streaming.
FIG. 3 is an illustration of an exemplary newsfeed interface.
FIG. 4 is an illustration of an additional exemplary story interface.
FIG. 5 is an illustration of an exemplary messaging interface.
FIG. 6 is an illustration of an exemplary short-form video consumption interface.
FIGS. 7A-7C are illustrations of exemplary newsfeed interfaces with short-form video creation elements visually associated with a newsfeed post.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

The present disclosure identifies a need for a short-form video (e.g., reel) creation framework that enables a user to create a short-form video based on content presented within a social media newsfeed. In some examples, a newsfeed post provided via a newsfeed interface may be associated with a short-form video creation element. When selected, a short-form video creation interface, for creating a short-form video that is based on the newsfeed post (e.g., a remix reel), may be presented in response. The short-form video creation interface may automatically include content from the newsfeed post to be included in the short-form video and may enable a user to edit the content for the short-form video and/or to add new content to the short-form video. After the creation process is complete, the short-form video may be posted to a social media interface. The posted short-form video may automatically include a link that navigates to the original newsfeed post and/or a link that navigates to other short-form videos that are based on the newsfeed post. The disclosed short-form video creation framework may enable content creation across two different platforms, enabling a user to create content (e.g., a short-form video) for a first platform (e.g., a short-form video platform such as a social media reels platform) based on content from a second platform (e.g., a social media newsfeed platform). The short-form video creation framework may additionally enable digital consumption across the two different platforms. For example, a newsfeed post with corresponding short-form videos (e.g., remix reels) may be posted in a newsfeed interface with an affordance that links to the corresponding short-form videos (e.g., enabling consumption of the corresponding short-form videos within the newsfeed interface and/or navigating to a short-form video interface for consumption of the corresponding short-form videos). Similarly, short-form videos that are based on a newsfeed post may be posted within a short-form video interface and may include an affordance that links to the newsfeed post.

As will be explained in greater detail below, embodiments of the present disclosure may improve the field of short-form video streaming by improving a framework for socially sharing short-form videos. The present disclosure may improve the functioning of a computer itself by improving data organization and short-form video editing.

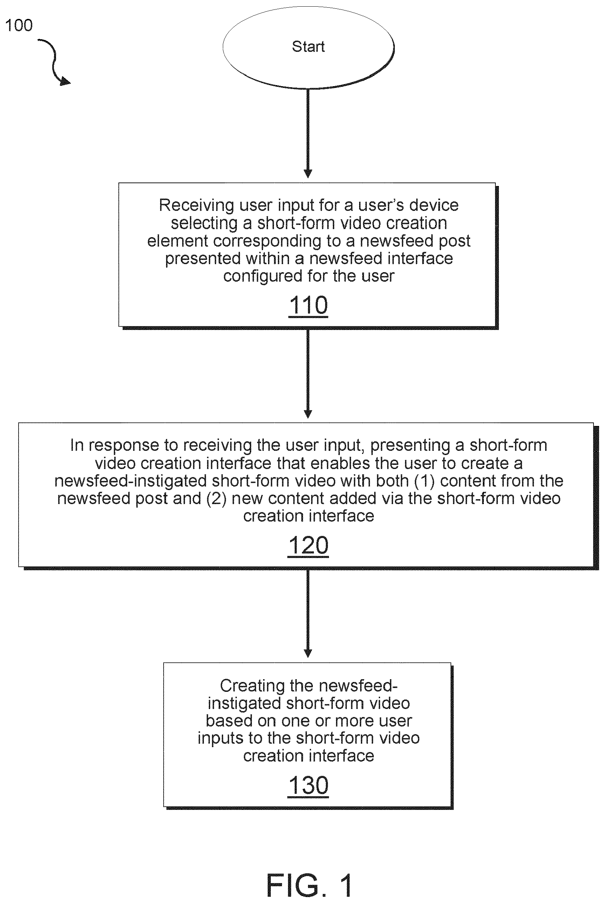

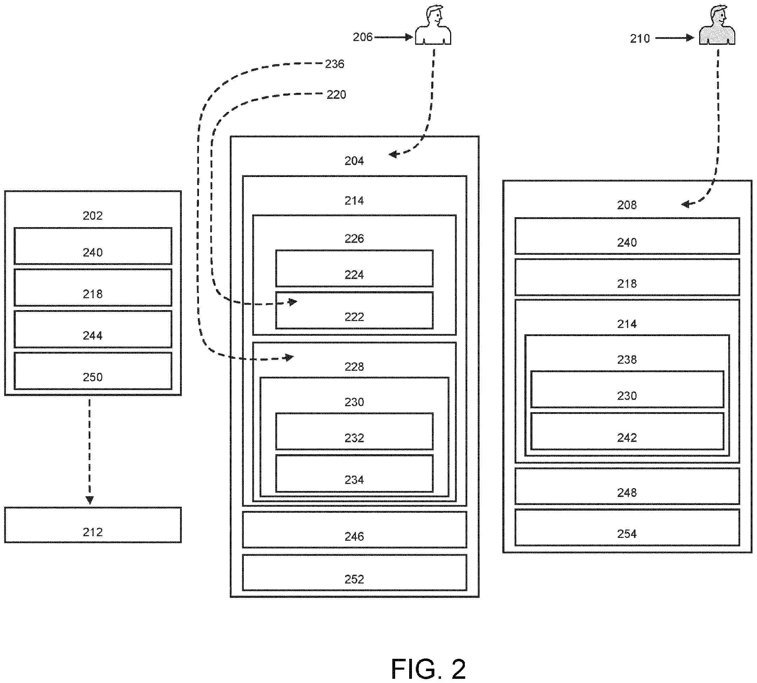

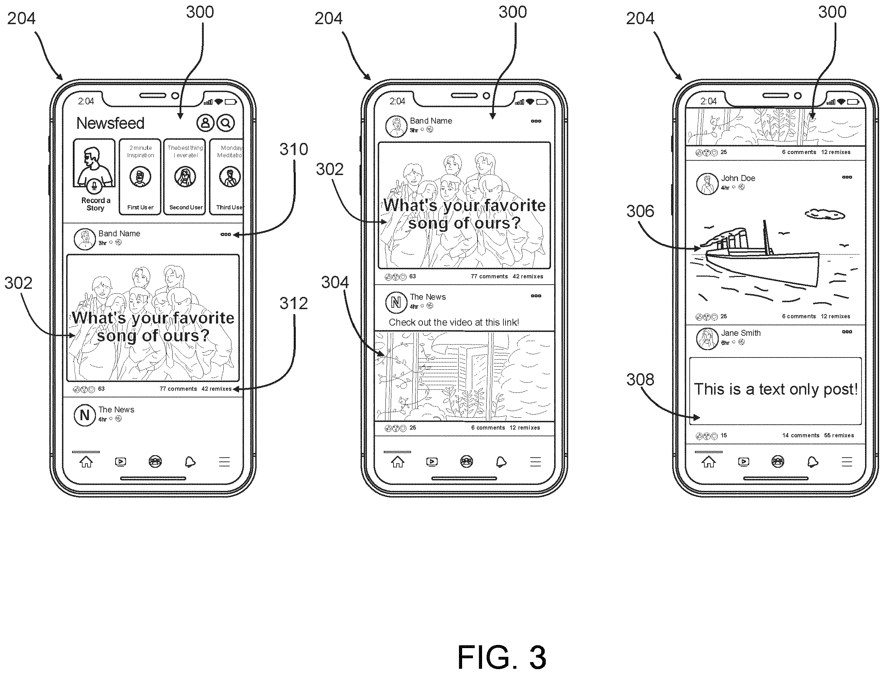

The following will provide, with reference to FIG. 1, detailed descriptions of computer-implemented methods for social media video streaming. Detailed descriptions of corresponding example systems will also be provided in connection with FIG. 2. Detailed descriptions of corresponding interfaces and embodiments will be provided in connection with FIGS. 3-7C. FIG. 1 is a flow diagram of an exemplary computer-implemented method 100 for social media video streaming. The steps shown in FIG. 1 may be performed by any suitable computer-executable code and/or computing system, including the system(s) illustrated in FIG. 2. For example, the steps shown in FIG. 1 may be performed by modules operating in a server 202 and/or modules operating in (1) a user device 204 (associated with a user 206) and/or (2) an additional user device 208 (associated with an additional user 210). In one example, each of the steps shown in FIG. 1 may represent an algorithm whose structure includes and/or is represented by multiple sub-steps, examples of which will be provided in greater detail below.

Server 202 generally represents any type or form of backend computing device that may perform one or more functions directed at social networking. The term "social networking" may refer to any type or form of digital communication that occurs between users of a platform via an interface of the platform (e.g., text-based communication, video conferencing and/or audio conferencing, digital status broadcasting, public content posting and/or commenting, etc.). In some examples, server 202 may operate as part of and/or in connection with a social media service 212. Although illustrated as a single entity in FIG. 2, server 202 may include and/or represent a group of multiple servers that operate in conjunction with one another.

User device 204 and additional user device 208 generally represents any type or form of computing device capable of reading computer-executable instructions. For example, user device 204 and/or additional user device 208 may represent a smart phone and/or a tablet. Additional examples of user device 204 and/or additional user device 208 may include, without limitation, a laptop, a desktop, a wearable device, a personal digital assistant (PDA), etc.

In some examples, users 206 and 210 of user devices 204 and 208 may be users (e.g., members) of social media service 212. In these examples, user devices 204 and 208 may each have installed an instance of a social media application 214, which may operate as part of social media service 212 and through which one or more services provided by social media service 212 (e.g., via server 202) may be accessible. In some examples, social media application 214 may be dedicated to a single service. For example, social media application 214 may represent a dedicated newsfeed application or a dedicated short-form video application. In other examples, social media application 214 may provide access to multiple services (e.g., a combination of the digital newsfeed service, digital story service, digital messaging service, and/or digital short-form video service described below). In addition, or as an alternative, to social media application 214, user devices 204 and/or 208 may have installed a browser that may navigate to one or more webpages through which the one or more services provided by social media service 212 (e.g., via server 202) may also be accessible.

As mentioned above, social media service 212 may provide a variety of services (e.g., platforms) for the users within its network (e.g., via server 202 and/or social media application 214). For example, social media service 212 may provide a newsfeed service. The term "newsfeed" may generally refer to any type or form of social media consumption channel that presents a scrollable collection of newsfeed posts. In some examples, a newsfeed may scroll (e.g., upward or downward) to reveal different posts within the newsfeed (e.g., in response to receiving user scrolling input). In one example, the scrollable collection may include newsfeed posts created by contacts of a particular user (e.g., friends of the particular user). In some examples, a particular user's newsfeed may be configured to include a combination of connected newsfeed posts (e.g., posts created by a contact of the particular user and/or by a user whom the particular user is following) and non-connected newsfeed posts (e.g., posts generated by users who are not contacts of the particular user and/or who are not being followed by the particular user). In some such examples, a newsfeed may be configured to include a determined ratio, or a ratio within a determined range of ratios, of connected to non-connected newsfeed posts.

The term "newsfeed post" generally refers to any type or form of digital composition that may be displayed in a newsfeed. Newsfeed posts may include, without limitation, text, an image, a video, a set of multiple images and/or videos, and/or a link (e.g., to a post, webpage, article, film, etc.). FIG. 3 depicts an exemplary newsfeed interface 300 with a newsfeed that includes a combination newsfeed post 302 with an image and text, a link-based newsfeed post 304, an image-based newsfeed post 306, and a text-based newsfeed post 308. In some examples, a newsfeed post may include a viewing pane for the content of the newsfeed post (e.g., the text in a text-based post, the image in an image-based post, etc.). A newsfeed post may also display a text-based caption, metadata content (e.g., content describing users that have been tagged in the newsfeed post, a timestamp, etc.), information indicating the source of the newsfeed post (e.g., the name of the creator of the post, a profile image, etc.), and/or a digital special effect (e.g., a digital sticker, a filter, an-augmented reality element, etc.). Such information and/or features may be displayed within the viewing pane (e.g., over the primary content), above the viewing pane, beneath the viewing pane, and/or may be otherwise visually associated with newsfeed post.

The newsfeed service may enable viewers of a newsfeed post to respond to the newsfeed post in a variety of ways. In some examples, a newsfeed interface may enable a user to comment on a newsfeed post, via a text, image, and/or video-based reply, and may create a digital thread of comments corresponding to the newsfeed post (e.g., displayed beneath the newsfeed post and/or accessible via a comments affordance). In some examples, as will be described in greater detail below in connection with steps 110-130, the newsfeed service may enable viewers of a newsfeed post to create a short-form video that is based on the newsfeed post (e.g., a short-form video that automatically includes content from the newsfeed post and/or is automatically configured to link to the newsfeed post).

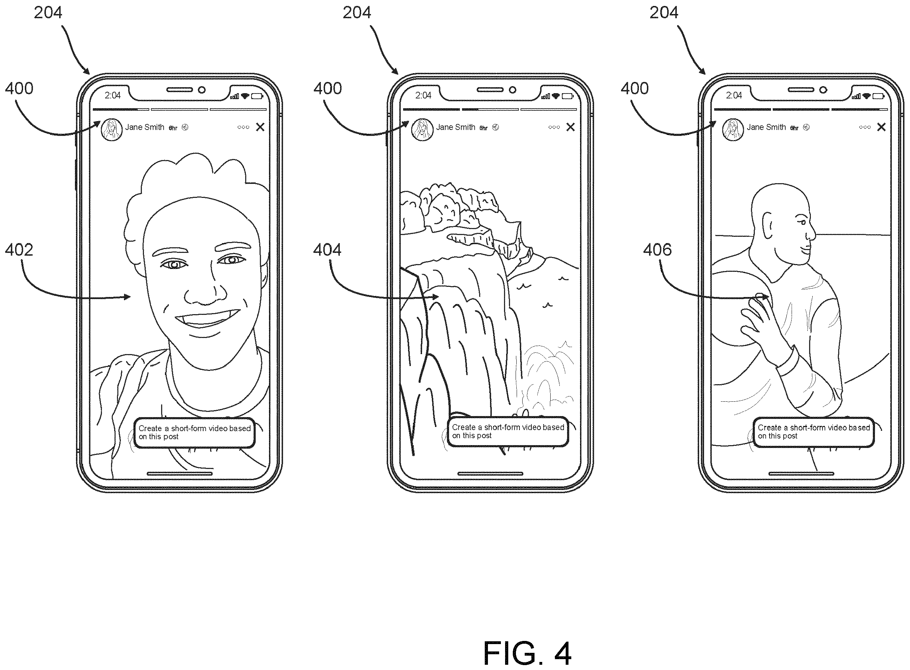

As another example, social media service 212 may provide a digital story service. The digital story service may provide users with a story consumption channel, which presents a continuous series of digital story posts to a story-consumer, one by one (e.g., in a slideshow format). The term "digital story post" may generally refer to any type or form of social media post intended for a story consumption channel. A digital story composition may include a variety of content (e.g., a digital photograph, a graphic, text, a digital video and/or a digital recording of a music composition). In one example, the story consumption channel may transition from presenting one digital story post to the next automatically, without requiring any user input to do so. In some examples, digital story posts from the same source (e.g., created and/or posted by the same user) may be grouped together within the story consumption channel, such that each digital story post from a particular source is displayed prior to displaying digital story posts from another source. In one embodiment, a digital story post may be ephemeral. That is, the digital story post may only be viewable for a predetermined amount of time. For example, a digital story composition may be set to disappear after twenty-four hours. FIG. 4 depicts an exemplary story interface 400 showing digital story posts 402, 404, and 406 of a user's digital story. Similar to the newsfeed service, the digital story service may enable viewers of a story post to comment on the post, via a text and/or image-based reply and/or reply story, creating a digital thread of comments. Additionally, the digital story service may enable viewers of a story post to create a short-form video (e.g., a remix reel) that is based on (e.g., that includes content from) the story post. Similar to the newsfeed service, a stories service may configure a story feed for a particular user that includes connected content (e.g., story posts created by users who are contacts of the particular user or being followed by the particular user), non-connected content, or a determined ratio of connected content to non-connected content.

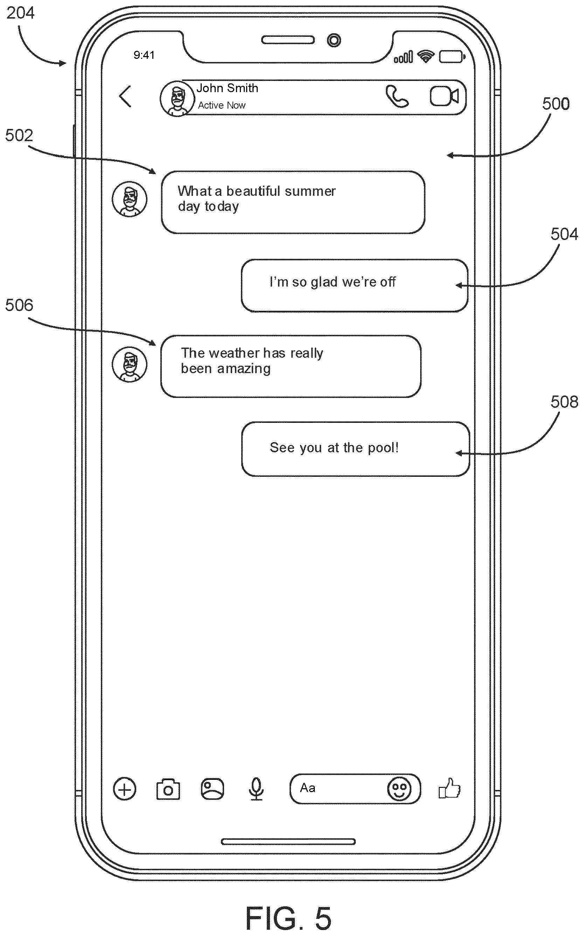

As another example, social media service 212 may provide a messaging service. The term "messaging service" may generally refer to any type or form of digital message delivery system that enables users of social media service 212 to exchange messages (e.g., text messages, audio messages, and/or video messages). FIG. 5 depicts an exemplary messaging interface 500 showing digital message posts 502, 504, 506, and 508 of a digital messaging thread.

In some examples, social media service 212 may provide a short-form video service (e.g., a reels service) that enables users to create short-form videos and/or consume (e.g., watch and/or digitally respond to) short-form videos created by other users. In one embodiment, social media service 212 may create a short-form video feed for each user of its short-form video service. The term "short-form video" may generally refer to a digital video configured for short-form video feed consumption. In some examples, a platform for creating and/or posting a short-form video may only enable the creation and/or posting of short-form videos that are a certain length and/or that are less than a certain length (e.g., less than thirty seconds in length). The term "short-form video feed" may generally refer to a series (e.g., a queue) of short-form videos (e.g., selected for a particular user) that social media application 214 (or a corresponding webpage) is configured to play, one by one, as a continuous series (e.g., advancing from one short-form video to the next automatically). In some examples, a short-form video feed may be configured to play short-form videos asynchronously (e.g., to play a continuously evolving queue of pre-recorded short-form videos). In one embodiment, the short-form video feed may only be configured to play pre-recorded short-form videos. Additionally or alternatively, a short-form video feed may be configured to play live short-form videos. In some examples, short-form videos may be continuously added to a user's short-form video feed as the short-form videos of the feed are consumed (e.g., such that a determined number of short-form videos are always in queue to be played).

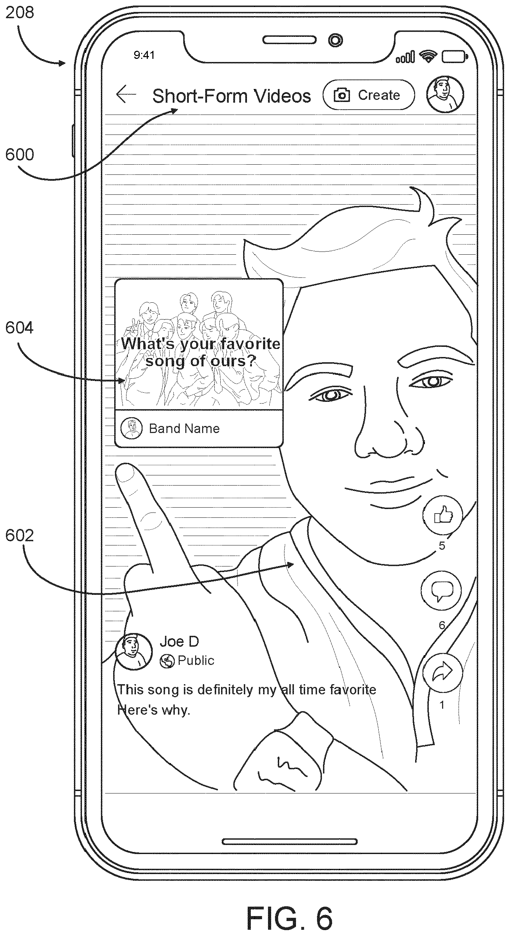

In some examples, a short-form video feed may be presented via a dedicated short-form video feed interface. In certain embodiments, short-form videos selected for a short-form video feed may be changed (and/or an order in which short-form videos are presented may be changed) each time the short-form video feed interface is refreshed. A short-form video feed interface may be refreshed in response to a variety of triggers (e.g., each time a user accesses the feed, each time the user digitally initiates a refresh action, in response to scrolling input, at designated intervals, etc.). FIG. 6 depicts an exemplary dedicated short-form video feed interface 600 presenting a short-form video. In some examples, as mentioned previously and as depicted in FIG. 6, short-form videos may be presented one by one as a continuous series of short-form videos (e.g., in a slideshow format). In other examples, multiple short-form videos may be displayed at once in a short-form video digest (e.g., via a full-screen digest of short-form video tiles, each corresponding to a different short-form video, or via a strip of short-form video tiles). In such examples, content from a short-form video may be configured to play in a loop within the short-form video's video tile. In some examples, a short-form video feed may be streamed via another platform of social media service 212. For example, a short-form video feed may be displayed via a short-form video strip in a newsfeed of a newsfeed service of social media service 212.

Short-form videos may be selected for the short-form video feed of a particular user based on a variety of metrics. For example, a short-form video may be selected based on a topic the short-form video has been tagged with (e.g., in response to a determination that the particular user is interested in and/or predicted to be interested in the topic). As another example, a short-form video may be selected based on a user who created the short-form video (e.g., in response to a determination that the particular user is following the user and/or is predicted to be interested in content by the creator). As another example, a short-form video may be selected based on a popularity of the short-form video.

In some examples, a short-form video feed may be thought of (e.g., configured) as a framework that exclusively and/or primarily provides users with non-connected content and/or that provides a user with a combination of non-connected content and content created by content-creators that the user is following. In contrast, a newsfeed and/or stories feed may be thought of (e.g., configured) as a framework that primarily provides its users with connected content or that provides users with a combination of connected and non-connected content. In some examples, a newsfeed and/or stories feed may be configured to include a determined ratio of connected to non-connected content in which connected content is favored over non-connected content (e.g., more connected content is included than non-connected content). By contrast, a short-form video feed may be configured to include only non-connected content or to include a determined ratio of non-connected content to content created by content-creators a particular user is following.

In some embodiments, a short-form video may be displayed (e.g., streamed) with a variety of information relating to the short-form video. Such information may include, for example, a name and/or profile element of an account that created the short-form video, a title of the short-form video, viewer responses to the short-form video and/or an affordance that navigates to viewer responses to the short-form video, one or more elements for providing a digital social response to the short-form video, a transcript of the short-form video, etc.

In examples in which a short-form video is based on a newsfeed post, the displayed information may include a visual indicator linking the short-form video to the newsfeed post. The visual indicator may include a link to the newsfeed post and/or additional short-form videos corresponding to the newsfeed post. FIG. 6 provides an exemplary depiction of a short-form video based on a newsfeed post with information displayed along with the short-form video, the information including a visual indicator 604 that links the short-form video to the newsfeed post. Features of visual indicators linking short-form videos to newsfeed posts will be described in greater detail below in connection with steps 110-130.

Returning to FIG. 1, at step 110, one or more of the systems described herein may receive user input for a user device selecting a short-form video creation element corresponding to a newsfeed post presented within a newsfeed interface configured for the user. For example, as illustrated in FIG. 2, a media module 218 may receive user input 220 for user device 204 selecting a creation element 222 corresponding to a newsfeed post 224 presented within a newsfeed interface 226 configured for user 206.

Media module 218 may receive user input 220 in a variety of ways. In examples in which media module 218 operates within a backend server, media module 218 may receive an indication of user input 220 from user device 204. Additionally or alternatively, in examples in which media module 218 operates within user device 204, media module 218 may receive user input 220 for user device 204 directly (e.g., via tapping input to a screen of user device 204, input to an auxiliary device such as a digital mouse, etc.).

Newsfeed Post 224 may refer to any type or form of digital post intended for a social media newsfeed (e.g., with one or more of the features described above in connection with FIG. 1 and FIG. 3). In some examples, newsfeed post 224 may represent a post created and/or posted by a contact of user 206. Alternatively, newsfeed post 224 may represent a post created and/or posted by a social media account that user 206 is following or may represent non-connected content. Newsfeed post 224 may include a variety of content. For example, newsfeed post 224 may include static content (e.g., an image and/or text), video content, and/or audio content. In some examples, newsfeed post 224 may include a link. In these examples, newsfeed post 224 may simply display the link and/or may display an image and/or video representation of content accessible via the link.

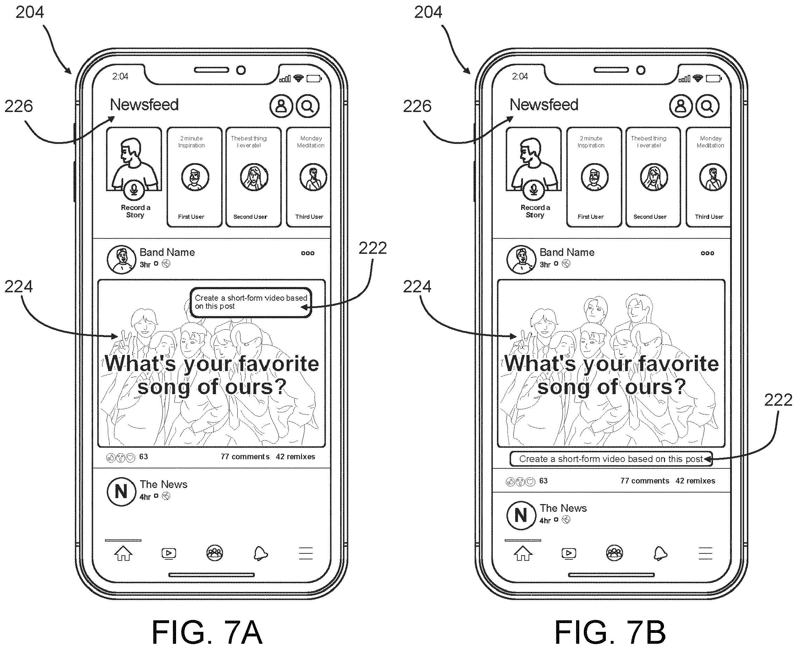

In some examples, newsfeed post 224 may include a prompt that invites social media content to be created in response to newsfeed post 224. For example, FIGS. 7A-7C depict an embodiment in which newsfeed post 224 includes the text "What's your favorite song of ours?" In some examples, the prompt may invite the creation of any type of social media content (e.g., a digital comment, a reply post, and/or a short-form video), as illustrated in FIGS. 7A-7C. In other examples, the prompt may specifically invite the creation of short-form videos. In some examples, newsfeed post 224 may automatically include creation element 222 (e.g., as part of a policy to include short-form video creation elements in association with each newsfeed post posted to a newsfeed interface). In other examples, creation element 222 may have been added to newsfeed post 224 in response to user input selecting that creation element 222 be added to newsfeed post 224 (e.g., user input from a user enabling the newsfeed-instigated short-form video creation process described herein to be applied to all of the user's newsfeed posts and/or user input that specifically enables the newsfeed-instigated short-form video creation process for newsfeed post 224). In some embodiments, creation element 222 may be added to newsfeed posts that are designated as public posts but not to newsfeed posts that are designated as private posts. Similarly, creation element 222 may be added to newsfeed posts posted by social media accounts designated as business and/or public figure accounts but not to newsfeed posts posted by personal user accounts.

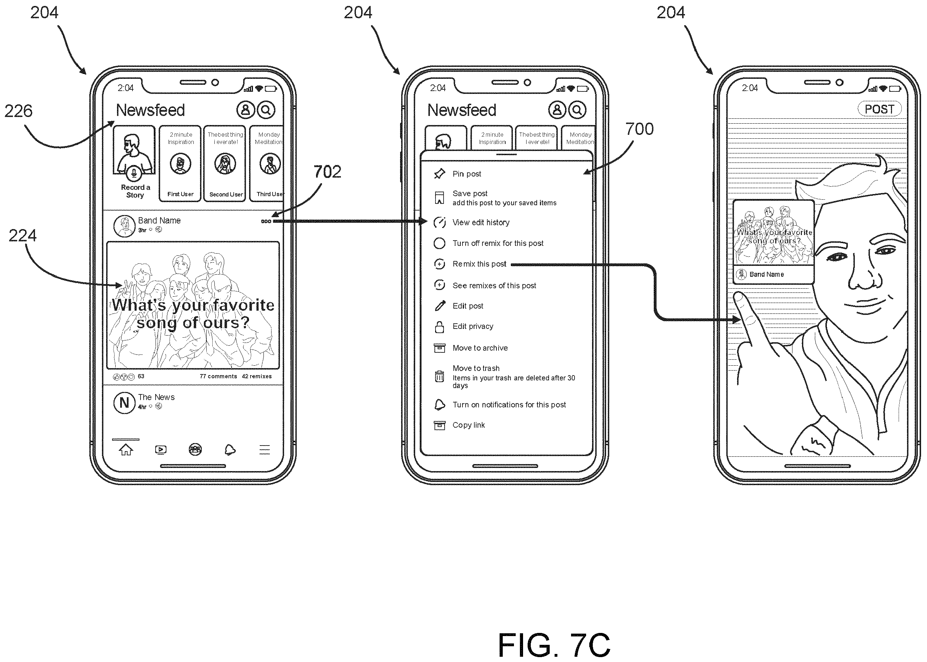

Creation element 222 may generally represent any type or form of user selectable element graphically represented within a newsfeed interface in association with a newsfeed post for which short-form video creation has been enabled. Creation element 222 may be visually associated with newsfeed post 224 in a variety of ways. In some examples, creation element 222 may be displayed within newsfeed post 224 (e.g., as depicted in FIG. 7A). Additionally or alternatively, creation element 222 may be displayed proximate to newsfeed post 224 (e.g., beneath a viewing pane of newsfeed post 224 as depicted in FIG. 7B). In some examples, creation element 222 may be displayed within a menu (e.g., menu 700 in FIG. 7C) accessible via a digital affordance 702 of newsfeed post 224 (e.g., as depicted in FIG. 7C). In one embodiment, a designated short-form video area (e.g., a short-form video bar) may be presented in association with the newsfeed post and may include links to both (1) create a short-form video based on the newsfeed post and (2) view other short-form videos that are based on the newsfeed post.

As mentioned previously, a newsfeed interface may enable a variety of different types of digital responses for a newsfeed post. For example, a newsfeed interface may enable a viewer of a newsfeed post to post a digital comment to the newsfeed post, post an emoji to the newsfeed post, and/or initiate a private message with the creator of the newsfeed post. In some such examples, creation element 222 may be one of a variety of elements associated with the newsfeed post, each of which may enable a different type of response to the newsfeed post. In some examples, a short-form video creation element may be configured to navigate to a short-form video creation interface specifically designed to enable the creation of a short-form video that is based on the newsfeed post corresponding to the short-form video creation element (e.g., as described at step 120).

Returning to FIG. 1, at step 120, one or more of the systems described herein may, in response to receiving the user input, present a short-form video creation interface that enables the user to create a newsfeed-instigated short-form video that includes both content from the newsfeed post and new content added via the short-form video creation interface. For example, as illustrated in FIG. 2, media module 218 may, in response to receiving user input 220, present a short-form video creation interface (e.g., creation interface 228) that enables user 206 to create a newsfeed-instigated short-form video (e.g., short-form video 230) that includes both newsfeed-post content 232 from newsfeed post 224 and new content 234 added via the short-form video creation interface.

Media module 218 may present creation interface 228 in a variety of ways. In examples in which media module 218 operates within a backend server, media module 218 may present creation interface 228 by instructing user device 204 to present creation interface 228 (e.g., via social media application 214). Additionally or alternatively, in examples in which media module 218 operates within user device 204, media module 218 may present creation interface 228 directly via a display element of user device 204.

The term "newsfeed-instigated short-form video" may refer to any type or form of short-form video that is based on a newsfeed post (e.g., that includes content from and/or an attribution to the newsfeed post). In some examples, creation interface 228 may be configured specifically for creating newsfeed-instigated short-form videos. For example, creation interface 228 may automatically add (e.g., include) content from newsfeed post 224. In some examples, creation interface 228 may additionally enable editing of the content from newsfeed post 224. The manner in which the content from newsfeed post 224 is added to creation interface 228 and/or may be edited via creation interface 228 may depend on the format of the content.

For example, in some examples newsfeed post 224 may include static content (e.g., an image and/or text). In examples in which newsfeed post 224 includes an image, creation interface 228 may enable user 206 to edit the image. Creation interface 228 may enable editing of the image in a variety of ways. For example, creation interface 228 may enable cropping, adjusting a white balance, exposure, contrast, vibrancy, and/or saturation, image sharpening, the applying of a filter and/or virtual element to the image, etc. In examples in which newsfeed post 224 includes text, creation interface 228 may enable user 206 to edit a visual appearance of the text (e.g., by adjusting a font, color, and/or size of the text), to redact the text, and/or to add commentary to the text. In addition, or as an alternative, to enabling user 206 to edit static content from newsfeed post 224, creation interface 228 may enable user 206 to add new content to the static content. For example, creation interface 228 may enable user 206 to add new video, new audio (e.g., audio of a user talking or singing, music, a sound effect, etc.), a new image (and/or a set of multiple new images), and/or new text to be provided in the resulting newsfeed-instigated short-form video at a designated portion of the short-form video (e.g., before, during, and/or after a display of the static content). In some examples, creation interface 228 may enable user 206 to determine a placement of the static content and the new content within the short-form video being created via creation interface 228. In one such embodiment, creation interface 228 may include a drag-and-drop functionality to facilitate the placement of content from newsfeed post 224 and/or the placement of the new content.

In one embodiment, static content from newsfeed post 224 may be included in a tile to be presented within a resulting newsfeed-instigated short-form video. In one such embodiment, new content added via creation interface 228 may be configured to take up an entirety of a viewing pane (configured for displaying short-form videos) and the tile may be superimposed over the new content within the viewing pane (e.g., at a position automatically selected by creation interface 228 and/or at a placement selected by user 206). As a specific example, in FIG. 6, a tile 604 is superimposed over content 602 (an image and/or video) uploaded by user 206. FIG. 6 illustrates an embodiment in which user 206 uploaded an image and/or video of user 206 pointing and positioned tile 604 such that user 206 appears to be pointing to tile 604.

In additional or alternative examples, newsfeed post 224 may include media content (e.g., video and/or audio content). In these examples, creation interface 228 may enable user 206 to edit the media content in a variety of ways. For example, creation interface 228 may enable user 206 to delete one or more portions of the media content. As another example, creation interface 228 may enable user 206 to apply, to the media content, a visual filter (e.g., a tinted overlay, an animated banner, and/or an augmented reality element) and/or an audio filter (e.g., a sound altering filter such as a slow-motion filter, a helium filter, a beautification filter, etc.). Additionally or alternatively, creation interface 228 may enable user 206 to add new content to the media content (e.g., such as the new content discussed above in connection with embodiments in which newsfeed post 224 includes static content). In examples in which user 206 adds new video and/or audio content, the disclosed systems (e.g., media module 218) may concatenate the new video and/or audio content with the media content from newsfeed post 224. The disclosed systems may concatenate the new video and/or audio content with the media content in a variety of ways. In some examples, the disclosed systems may overlay the new audio content over the media content, such that the new audio content plays at the same time as the media content in a resulting short-form video. In one embodiment, the disclosed systems may splice one or more portions of new audio and/or video content with one or more portions of the media content such that a resulting short-form video alternates between playing portions of the media content from newsfeed post 224 and portions of new audio and/or video content added by user 206. As discussed above in connection with embodiments in which newsfeed post 224 includes static content, in some examples new media content may be added to a tile to be displayed at the same time as content from newsfeed post 224 is presented in a resulting short-form video.

In certain examples in which newsfeed post 224 includes a link, creation interface 228 may enable user 206 to edit content accessed via the link. In these examples, creation interface 228 may enable user 206 to edit such content in a variety of ways. In some examples, creation interface 228 may enable user 206 to add new content (e.g., such as the new content described above in connection with static content and media content embodiments) to be displayed in a resulting short-form video before, during, or after a display of the link and/or content accessed via the link. Additionally or alternatively, creation interface 228 may enable user 206 to edit an image and/or text accessed via the link (e.g., by enabling the edits described above in connection with static content embodiments), to delete a portion of video and/or audio accessed via the link and/or to apply a visual filter and/or audio filter to content accessed via the link (e.g., by enabling the edits described above in connection with media content embodiments).

In some examples, creation interface 228 may be configured to automatically include, within a short-form video being created via creation interface 228, an attribution to newsfeed post 224. In some examples, the attribution may take the form of a visual indicator linking the short-form video to newsfeed post 224. A position of the attribution may be automatically selected or creation interface 228 may enable the position to be selected via user input (e.g., via a drag-and-drop functionality).

Returning to FIG. 1, at step 130, one or more of the systems described herein may create the newsfeed-instigated short-form video based on one or more user inputs to the short-form video creation interface. For example, as illustrated in FIG. 2, media module 218 may create short-form video 230 based on user inputs 236 to creation interface 228. User inputs 236 may create short-form video 230 in a variety of ways as enabled by creation interface 228 (e.g., using one or more of the features described above in connection with step 120).

Media module 218 may create short-form video 230 in a variety of ways. For example, media module 218 may create short-form video 230 by adding content submitted and/or selected by user 206 via creation interface 228 and/or content selected from newsfeed post 224 via creation interface 228. In some examples, a spatial arrangement of such content may be automatically determined. In other examples, the spatial arrangement may be determined by user input. Similarly, a temporal order in which such content is presented may be automatically determined and/or determined via user input.

In examples in which media module 218 operates within a backend server (e.g., server 202), media module 218 may create short-form video 230 in response to receiving an indication of user inputs 236 from user device 204 and/or by instructing user device 204 to create short-form video 230 (e.g., via social media application 214). Additionally or alternatively, in examples in which media module 218 operates within user device 204, media module 218 may create short-form video 230 directly (e.g., via social media application 214) and may additionally transmit short-form video 230 to server 202 for sharing to additional user devices (e.g., in response to receiving user posting input).

Once short-form video 230 is created (e.g., and transmitted to server 202), a streaming module 240 may stream short-form video 230 to an additional user's device (e.g., additional user device 208) via a consumption interface 238 presented via a display element of the additional user's device (e.g., via an additional newsfeed interface configured for the additional user and/or a short-form video digest interface configured for the additional user). While streaming short-form video 230, streaming module 240 may present, in association with short-form video 230, a visual indicator 242 linking short-form video 230 to newsfeed post 224. In some examples, visual indicator 242 may include a link to newsfeed post 224 and/or to additional newsfeed-instigated short-form videos corresponding to newsfeed post 224. For example, FIG. 6 illustrates an embodiment in which a visual indicator takes the form of a tile (visual indicator 604) showing content (in this case an image with text) from the original newsfeed post. In this example, selection of the visual indicator may navigate to the original newsfeed post and/or additional newsfeed-instigated short-form videos corresponding to the newsfeed post.

In some examples, once short-form video 230 is created, the disclosed systems (e.g., via media module 218) may (1) present newsfeed post 224 within a newsfeed interface, configured for additional user 210, via additional user device 208 and (2) present, proximate to newsfeed post 224 within the additional newsfeed interface, a link to short-form video 230. FIG. 3 depicts an interface in which selectable text 312 (i.e., "42 remixes") navigates to each of the posted short-form videos that are based the newsfeed post corresponding to the selectable text. In these examples, streaming module 240 may, in response to receiving additional user input selecting the link, stream short-form video 230 via additional user device 208.

In some such examples, streaming module 240 may stream short-form video 230 as part of streaming multiple short-form videos (e.g., every short-form video) created based on newsfeed post 224. In one embodiment, streaming module 240 may initiate automatic short-form video chaining via additional user device 208, in response to receiving the additional user input selecting the link to short-form video 230 presented proximate to newsfeed post 224, by streaming a continuous series of additional short-form videos after streaming short-form video 230, automatically proceeding from streaming one additional short-form video to a next additional short-form video. In some such examples, additional short-form videos based on newsfeed post 224 may be streamed immediately following short-form video 230. In other examples, the additional short-form videos may be unrelated to newsfeed post 224.

In addition, or as an alternative, to enabling the creation of newsfeed-instigated short-form videos, the disclosed systems and methods may enable the creation of story-instigated short-form videos using any of the features described above in connection with the newsfeed-instigated short-form video process. In such examples, a short-form video creation element may be presented within a story post and a video creation interface (e.g., presented in response to user input selecting the creation element) may enable the user to create a story-instigated short-form video with (1) content from the story post and (2) new content added via the creation interface. A resulting short-form video may be accessible for digital consumption via a stories feed and/or a dedicated short-form video interface. Additional social media feeds to which the disclosed short-form video creation process may be applied include, without limitation, a marketplace feed, a video-watch feed, a music video digest feed, etc.

As described above, the present disclosure provides a short-form video creation system (e.g., a remix system) that enables the creation of a short-form video (e.g., a remix reel) that is based on content (e.g., links, text, photos, and/or videos) posted to a social media feed (e.g., a newsfeed and/or a stories feed). This short-form video creation system may provide a cross-platform entry point for short-form videos (e.g., reels). A short-form video based on content from a social media feed may include a link that navigates to the content posted on the social media feed. The content posted on social media feed may include (e.g., beneath the content and/or as an affordance within the content) an entry point for consuming any short-form videos that are based on the content. Enabling short-form videos based on social media feed posts may enable a feed post to be a starting point for short-form video creation.

### Example Embodiments

Example 1: A computer-implemented method may include (1) receiving user input for a user's device selecting a short-form video creation element corresponding to a newsfeed post presented within a newsfeed interface configured for the user, (2) in response to receiving the user input, presenting a short-form video creation interface that enables the user to create a newsfeed-instigated short-form video that has both content from the newsfeed post and new content added via the short-form video creation interface, and (3) creating the newsfeed-instigated short-form video based on one or more user inputs to the short-form video creation interface.

Example 2: The computer-implemented method of example 1, where the short-form video creation element is displayed (1) within the newsfeed post, (2) proximate to the newsfeed post, and/or (3) within a menu accessible via an affordance of the newsfeed post.

Example 3: The computer-implemented method of examples 1-2, where presenting the short-form video creation interface includes automatically providing the content from the newsfeed post within the short-form video creation interface to be added to the newsfeed-instigated short-form video.

Example 4: The computer-implemented method of examples 1-3, where the content from the newsfeed post includes static content that includes at least one of an image or text.

Example 5: The computer-implemented method of example 4, where the new content includes new video, new audio, a new image, and/or new text, to be provided in the newsfeed-instigated short-form video before, during, and/or after a display of the static content.

Example 6: The computer-implemented method of examples 4-5, where the static content includes an image and the short-form video creation interface enables the user to edit the image.

Example 7: The computer-implemented method of examples 4-6, where the static content includes text and the short-form video creation interface enables the user to edit the text by editing a visual appearance of the text, redacting the text, and/or adding commentary to the text.

Example 8: The computer-implemented method of examples 1-7, where the content from the newsfeed post includes media content (e.g., video content and/or audio content).

Example 9: The computer-implemented method of example 8, where the short-form video creation interface enables the user to delete one or more portions of the media content, apply a visual filter and/or an audio filter to the media content, and/or add new content to the newsfeed-instigated short-form video, the new content including new audio, new video, a new image, and/or new text to be provided in the newsfeed-instigated short-form video before, during, and/or after a display of the media content.

Example 10: The computer-implemented method of examples 1-9, where the newsfeed post includes a link.

Example 11: The computer-implemented method of example 10, where the short-form video creation interface enables the user to edit the newsfeed post by (1) enabling the user to add new content to the newsfeed-instigated short-form video, the new content including new audio, new video, a new image, and/or new text, to be provided in the newsfeed-instigated short-form video before, during, and/or after a display of at least one of the link or content accessed via the link, (2) enabling the user to edit an image accessed via the link, (3) enabling the user to edit text accessed via the link by enabling the user to edit a visual quality of the text, redact the text, and/or add commentary to the text, (4) enabling the user to delete a portion of video and/or audio accessed via the link, and/or (5) enabling the user to apply a visual filter and/or an audio filter to content accessed via the link.

Example 12: The computer-implemented method of examples 1-11, where the computer-implemented method further includes streaming the newsfeed-instigated short-form video to an additional user's device via an additional newsfeed interface configured for the additional user and/or a short-form videos digest interface configured for the additional user.

Example 13: The computer-implemented method of example 12, where streaming the newsfeed-instigated short-form video includes presenting, in association with the newsfeed-instigated short-form video, a visual indicator linking the newsfeed-instigated short-form video to the newsfeed post.

Example 14: The computer-implemented method of example 13, where the visual indicator represents and/or includes a link to (1) the newsfeed post and/or (2) additional newsfeed-instigated short-form videos corresponding to the newsfeed post.

Example 15: The computer-implemented method of examples 1-14, where the computer-implemented method further includes (1) presenting the newsfeed post within an additional newsfeed interface, configured for an additional user, via a device of the additional user and (2) presenting, proximate to the newsfeed post within the additional newsfeed interface, a link to the newsfeed-instigated short-form video.

Example 16: The computer-implemented method of examples 1-15, where the computer-implemented method further includes in response to receiving additional user input selecting the link, streaming the newsfeed-instigated short-form video via the additional user's device.

Example 17: The computer-implemented method of example 16, where the computer-implemented method further includes initiating automatic short-form video chaining via the additional user's device, in response to receiving the additional user input, by streaming additional short-form videos after streaming the newsfeed-instigated short-form video, automatically proceeding from streaming one additional short-form video to a next additional short-form video.

Example 18: The computer-implemented method of examples 1-17, where (1) the newsfeed interface is provided as part of a newsfeed platform hosted by a social media service that also hosts a short-form video platform, (2) the short-form video platform provides users with a short-form video-feed including a series of short-form videos configured to be streamed, one by one, as a continuous series, and (3) the short-form video is a short-form video configured for short-form video-feed consumption.

Example 19: A system for implementing the above-described method may include at least one physical processor and physical memory that includes computer-executable instructions that, when executed by the physical processor, cause the physical processor to (1) receive user input to a user's device selecting a short-form video creation element corresponding to a newsfeed post presented within a newsfeed interface configured for the user, (2) in response to receiving the user input, present a short-form video creation interface that enables the user to create a newsfeed-instigated short-form video with both content from the newsfeed post and new content added via the short-form video creation interface, and (3) create the newsfeed-instigated short-form video based on one or more user inputs to the short-form video creation interface.

Example 20: A non-transitory computer-readable medium may include one or more computer-readable instructions that, when executed by at least one processor of a computing device, cause the computing device to (1) receive user input to a user's device selecting a short-form video creation element corresponding to a newsfeed post presented within a newsfeed interface configured for the user, (2) in response to receiving the user input, present a short-form video creation interface that enables the user to create a newsfeed-instigated short-form video with both content from the newsfeed post and new content added via the short-form video creation interface, and (3) create the newsfeed-instigated short-form video based on one or more user inputs to the short-form video creation interface.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device (e.g., memory device 244, 246, and 248 in FIG. 2) and at least one physical processor (e.g., physical processor 250, 252, and 254 in FIG. 2).

The term "memory device" generally represents any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In addition, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain embodiments one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. For example, one or more of the modules recited herein may transform a processor, volatile memory, non-volatile memory, and/or any other portion of a physical computing device from one form to another by executing on the computing device, storing data on the computing device, and/or otherwise interacting with the computing device.

The term "computer-readable medium" may refer to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A computer-implemented method comprising:
receiving user input for a user's device selecting a short-form video creation element corresponding to a newsfeed post presented within a newsfeed interface configured for the user;
in response to receiving the user input, presenting a short-form video creation interface that enables the user to create a newsfeed-instigated short-form video comprising both content from the newsfeed post and new content added via the short-form video creation interface; and
creating the newsfeed-instigated short-form video based on one or more user inputs to the short-form video creation interface.

2. The computer-implemented method of claim 1, wherein the short-form video creation element is displayed at least one of (1) within the newsfeed post, (2) proximate to the newsfeed post, or (3) within a menu accessible via an affordance of the newsfeed post.

3. The computer-implemented method of claim 1 or claim 2, wherein presenting the short-form video creation interface comprises automatically providing the content from the newsfeed post within the short-form video creation interface to be added to the newsfeed-instigated short-form video.

4. The computer-implemented method of any preceding claim, wherein the content from the newsfeed post comprises static content comprising at least one of an image or text.

5. The computer-implemented method of claim 4, wherein the new content comprises at least one of new video, new audio, a new image, or new text to be provided in the newsfeed-instigated short-form video at least one of before, during, or after a display of the static content.

6. The computer-implemented method of claim 4 or claim 5, wherein the static content comprises an image and the short-form video creation interface enables the user to edit the image.

7. The computer-implemented method of any of claims 4 to 6, wherein the static content comprises text and the short-form video creation interface enables the user to edit the text by at least one of editing a visual appearance of the text, redacting the text, or adding commentary to the text.

8. The computer-implemented method of any preceding claim, wherein the content from the newsfeed post comprises media content comprising at least one of video content or audio content; and preferably wherein the short-form video creation interface enables the user to at least one of:
delete one or more portions of the media content;
apply at least one of a visual filter or an audio filter to the media content; or
add new content to the newsfeed-instigated short-form video, the new content comprising at least one of new audio, new video, a new image, or new text to be provided in the newsfeed-instigated short-form video at least one of before, during, or after a display of the media content.

9. The computer-implemented method of any preceding claim, wherein the newsfeed post comprises a link; and preferably wherein the short-form video creation interface enables the user to edit the newsfeed post by at least one of:
enabling the user to add new content to the newsfeed-instigated short-form video, the new content comprising at least one of new audio, new video, a new image, or new text, to be provided in the newsfeed-instigated short-form video at least one of before, during, or after a display of at least one of the link or content accessed via the link;
enabling the user to edit an image accessed via the link;
enabling the user to edit text accessed via the link by enabling the user to at least one of edit a visual quality of the text, redact the text, or add commentary to the text;
enabling the user to delete a portion of at least one of video or audio accessed via the link; or
enabling the user to apply at least one of a visual filter or an audio filter to content accessed via the link.

10. The computer-implemented method of any preceding claim, further comprising streaming the newsfeed-instigated short-form video to an additional user's device via at least one of an additional newsfeed interface configured for the additional user or a short-form video digest interface configured for the additional user; and preferably wherein streaming the newsfeed-instigated short-form video comprises presenting, in association with the newsfeed-instigated short-form video, a visual indicator linking the newsfeed-instigated short-form video to the newsfeed post; and preferably wherein the visual indicator comprises a link to at least one of (1) the newsfeed post or (2) additional newsfeed-instigated short-form videos corresponding to the newsfeed post.

11. The computer-implemented method of any preceding claim, further comprising:
presenting the newsfeed post within an additional newsfeed interface, configured for an additional user, via a device of the additional user; and
presenting, proximate to the newsfeed post within the additional newsfeed interface, a link to the newsfeed-instigated short-form video.

12. The computer-implemented method of claim 11, further comprising in response to receiving additional user input selecting the link, streaming the newsfeed-instigated short-form video via the additional user's device; and preferably further comprising initiating automatic short-form video chaining via the additional user's device, in response to receiving the additional user input, by streaming a plurality of additional short-form videos after streaming the newsfeed-instigated short-form video, automatically proceeding from streaming one additional short-form video to a next additional short-form video.

13. The computer-implemented method of any preceding claim, wherein:
the newsfeed interface is provided as part of a newsfeed platform hosted by a social media service that also hosts a short-form video platform;
the short-form video platform provides users with a short-form video-feed comprising a series of short-form videos configured to be streamed, one by one, as a continuous series; and
the short-form video comprises a short-form video configured for short-form video-feed consumption.

14. A system comprising:
at least one physical processor;
physical memory comprising computer-executable instructions that, when executed by the physical processor, cause the physical processor to:
receive user input to a user's device selecting a short-form video creation element corresponding to a newsfeed post presented within a newsfeed interface configured for the user;
in response to receiving the user input, present a short-form video creation interface that enables the user to create a newsfeed-instigated short-form video comprising both content from the newsfeed post and new content added via the short-form video creation interface; and
create the newsfeed-instigated short-form video based on one or more user inputs to the short-form video creation interface.

15. A non-transitory computer-readable medium comprising one or more computer-readable instructions that, when executed by at least one processor of a computing device, cause the computing device to:
receive user input to a user's device selecting a short-form video creation element corresponding to a newsfeed post presented within a newsfeed interface configured for the user;
in response to receiving the user input, present a short-form video creation interface that enables the user to create a newsfeed-instigated short-form video comprising both content from the newsfeed post and new content added via the short-form video creation interface; and
create the newsfeed-instigated short-form video based on one or more user inputs to the short-form video creation interface.
